# EUROPEAN PATENT SPECIFICATION

(11) **EP 3 143 872 B1**
(45) Date of publication and mention of the grant of the patent: **26.08.2020**
(21) Application number: 15792249.3
(22) Date of filing: 13.04.2015
(51) Int. Cl.: A01G 3/08, A01G 17/02, A01G 3/00

(54) **MANUAL DEVICE FOR REMOVING BUDS AND YOUNG SHOOTS**
MANUELLE VORRICHTUNG ZUM ENTFERNEN VON KNOSPEN UND JUNGEN TRIEBEN
APPAREIL ÉBOURGEONNEUR MANUEL

(30) Priority: 15.05.2014 ES 201430660 U
(43) Date of publication of application: 22.03.2017
(73) Proprietor: Baya Sánchez, Daniel, 50540 Borja (Zaragoza) (ES)
(72) Inventor: Baya Sánchez, Daniel, 50540 Borja (Zaragoza) (ES)
(74) Representative: Schäfer, Matthias W.
(86) International application number: PCT/ES2015/070287
(87) International publication number: WO 2015/173447

(56) References cited:
- DE-A1-102009 023 009
- ES-U- 1 083 705
- ES-U- 1 083 705
- FR-A1- 2 881 317
- NZ-A- 579 024
- US-A1- 2013 326 942
- DATABASE WPI Week 201236, Derwent Publications Ltd., London, GB; AN 2012-F65123, XP055360628 RETRIEVED & NZ 579 024 A (CARSON REGINALD GREEN) 27 April 2012
- DATABASE WPI Week 198951, Derwent Publications Ltd., London, GB; AN 1989-371349, XP055360630 RETRIEVED & DE 38 18 640 A1 (LOBMEYER WALTER) 14 December 1989
- DATABASE WPI Week 200981, Derwent Publications Ltd., London, GB; AN 2009-R87870, XP055360631 & DE 10 2009 023009 A1 (JAKOB MANFRED) 03 December 2009

## Description

The present description refers to a manual shoot remover intended to remove the shoots that develop at the base and on the trunk of vines, young trees or other varieties of plants, operative via a handle with cross-body strap, comprising a rolled profile structure formed by a base with a rolled profile section, centred on its lower part, also incorporating a ball-head connector designed to anchor a handle with cross-body strap and, positioned on the same base with ball-head connector, a fixed side, forming part of the rolled profile structure, and a moving side, positioned at an angle of more than 90°, with interchangeable brushes with a number of rows of bristles inserted into the profile of the said sides.

### Background of the invention

At present, when the trunks and branches of vines tend to develop secondary shoots on their base and trunk, causing excessive branching out of the vine, a shoot removing operation must be performed in order to prevent excessive leaf development and to ensure that the necessary energy is kept in the lower part of the branch where the bunch of grapes will form, using for this purpose appropriate machinery with rotating brushes that automatically remove the said shoots, with the drawback that these machines can only be used on large areas with plantations in rows on espaliers or training trellises.

After the mechanical shoot remover has passed through the vines they have to be inspected and any shoots that have not been removed must be cut off manually, with the drawback that this entails having to bend down and constantly adopt uncomfortable postures.

Another drawback is that in smaller plantations where the vine plantation has low vine plants, the shoot removal operation has to be carried out by hand, involving the effort of continually bending down to remove the shoots.

Other solutions have been sought in order to facilitate shoot removal operations, thus Spanish Utility Model U201330732 describes a manual shoot remover consisting of a base shaped in the form of a "U", provided with two side brushes with several rows of bristles that are slanting and facing each other, joined by a rear brush having several rows of bristles positioned perpendicular to the base of the rear brush, which incorporates a connector designed to anchor a handle with cross-body strap, but with the drawback that the brushes are not interchangeable so that the shoot remover has to be replaced when the brushes wear out.

Documents ES 1 083 705 U, DE 102009023009 A1 and NZ 579024 A disclose handheld shoot remover brushes for wine bud removal. The shoot remover brushes according to this prior art is using wire bristles that are attached to a handle in a fixed position not movable on the base.

### Description of the invention

In order to facilitate as far as possible the manual shoot removing operation, a manual shoot remover having the features of claim 1 has been described. Advantageaous embodiments are described in the dependent claims.

The manual shoot remover comprises a rolled profile structure formed by a base with ball-head connector, designed to anchor a handle with cross-body strap and, positioned on the same base with ball-head connector, a fixed side forming part of the rolled profile structure and a moving side, positioned at an angle of more than 90°, with interchangeable brushes with a number of rows of bristles inserted into the profile of the said sides.

The base with ball-head connector incorporates a rolled profile section, centred on its lower part, for optional insertion of an additional brush.

Both the fixed side and the moving side, positioned on the base with ball-head connector, as they face each other, maintain a slight slant to prevent the brushes inserted in them from meeting at the front.

The brushes are attached onto the sides through the space in the rolled profile itself, being adjusted to it by means of the pressure of bolts.

The ball-head connector to anchor a handle with cross-body strap increases the manoeuvrability of the shoot remover.

The moving side allows adjustment of the brushes to enhance the shoot removing operation, its position being adjusted to the fixed profile structure by means of bolts.

In an alternative embodiment, the sides that form the rolled profile structure are positioned on the base with ball-head connector, at an angle of approximately 90°.

In another alternative embodiment, the sides that form the rolled profile structure are positioned on the base with ball-head connector describing an arc.

Optionally, incorporated in the profile of the base with ball-head connector, is an additional brush, designed to enhance shoot removal, its position being adjusted by means of bolts.

Optionally, incorporated in the profile of the base with ball-head connector is a roller, designed to facilitate the manoeuvrability of the manual shoot remover, its position being adjusted by means of bolts.

Optionally, incorporated on one of the sides or both of the sides is a toothed support or blade support, designed to remove woody shoots or ground shoots.

The cross-body strap that the handle incorporates is designed so that the user can carry it comfortably on his/her back while inspecting the vines during shoot removing operations.

The manual shoot remover fits perfectly over the trunk of vines or young trees, removing shoots by the dragging action of the bristles of the brushes, without causing any damage to them, the user being in a comfortable standing position while carrying out the shoot removing operation.

### Advantages of the invention

The manual shoot remover presented, affords numerous advantages, the most important being that of performing the shoot removing operation with interchangeable brushes, supported on a rolled profile structure with a moving side, which allows the adjustment of the aforesaid brushes, to enhance shoot removing operations in a comfortable standing position without having to constantly bend down, easily removing shoots without damaging the trunks.

Another important advantage is that the sides, as they face each other, maintain a slight slant between them to prevent the brushes that are inserted between them from meeting at the front.

Another important advantage is that the sides that form the rolled profile structure are positioned on the base with ball-head connector, describing an angle of more than 90°.

A further important advantage is that the manual shoot remover has a base with ball-head connector for the insertion of a handle with cross-body strap, which enhances its manoeuvrability both on low trunks of vine plants and vines on espaliers, also incorporating, on its lower part, a profile section for the insertion of an additional brush.

An additional important advantage is that, in alternative embodiments, the sides that form the rolled profile structure are arranged on the base with ball-head connector, describing an angle close to 90° and/or describing an arc.

Another of the advantages of the invention is that, optionally, an additional brush or a roller is incorporated on the profile of the base with ball-head connector.

As a further advantage it can be added that, optionally, on one or both of the sides, a toothed support is incorporated to remove woody shoots, weeds or shoots at the base of the trunk of the vine, young trees or other varieties of plants.

And lastly, it is an advantage that the handle of the shoot remover has a cross-body strap for users' comfort, also incorporating a grip and a perpendicular section to improve handling.

### Description of the figures

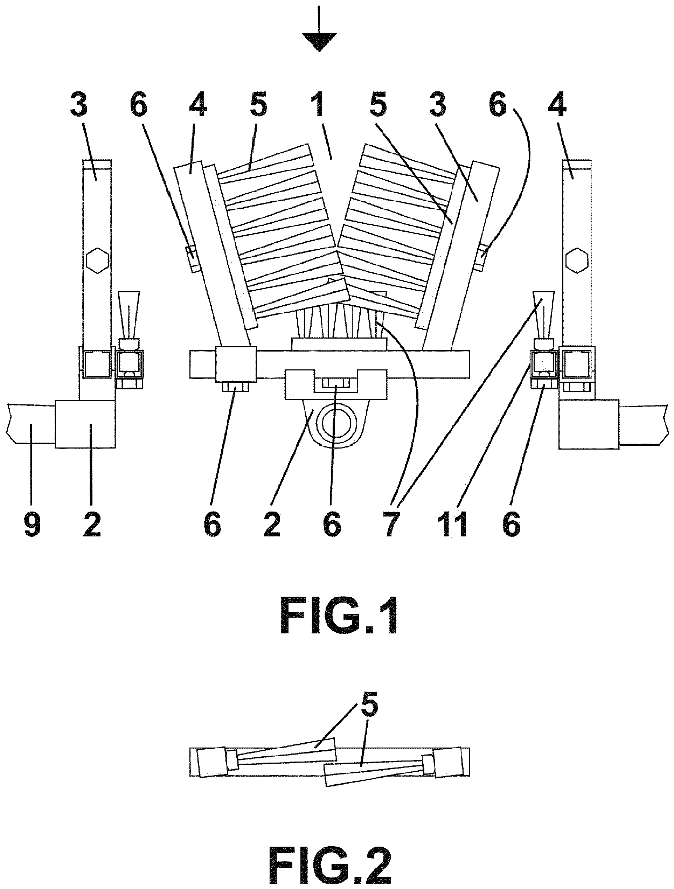

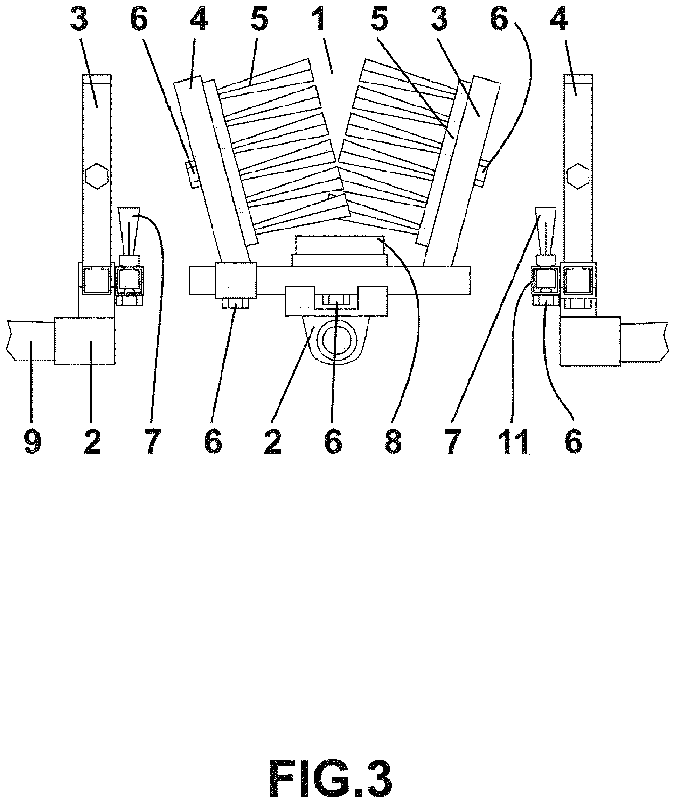

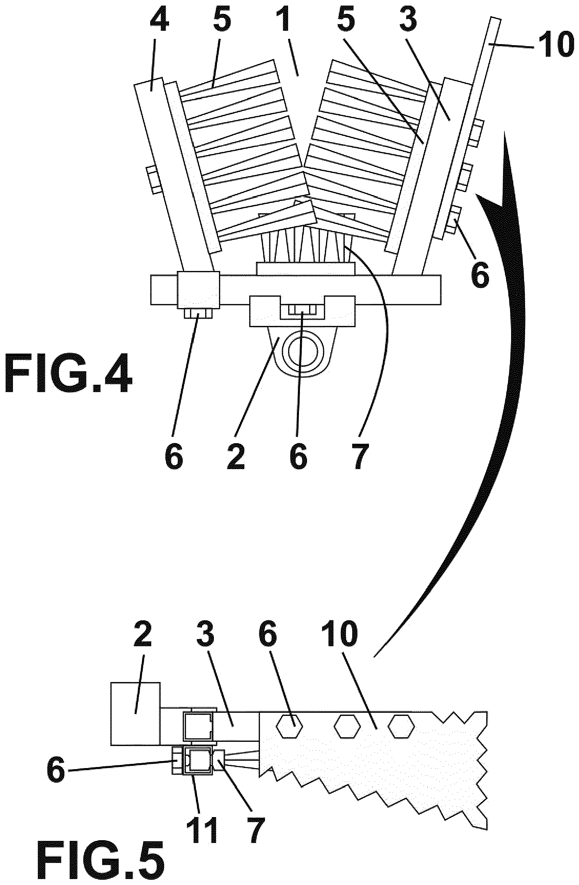

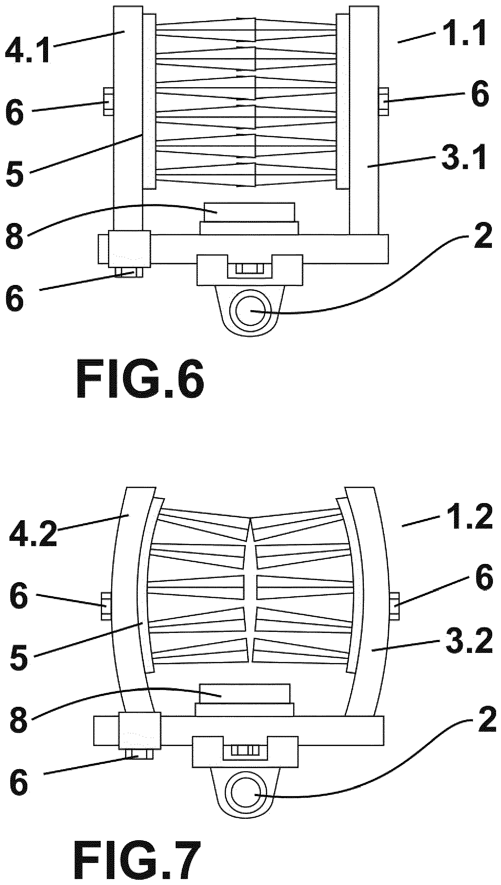

To provide a better understanding of this invention, a preferred practical embodiment of it is shown in the drawing attached.
Figure -1- shows a profile and plan view of the manual shoot remover in a preferred embodiment, its sides describing an angle of more than 90° and incorporating optional brushes.
Figure -2- shows a schematic view of the front of the manual shoot remover, showing the slight slant of the brushes facing each other and inserted in the sides.
Figure -3- shows a profile and plan view of the manual shoot remover in a preferred embodiment, its sides describing an angle of more than 90°, incorporating a roller and an optional brush.
Figure -4- shows a profile and plan view of the manual shoot remover in a preferred embodiment, its sides describing an angle of more than 90°, incorporating a toothed support on one of its sides.
Figure -5- shows a construction detail of the toothed support.
Figure -6- shows a plan view of the manual shoot remover in an alternative embodiment, its sides describing an angle of approximately 90°, incorporating an optional roller.
Figure -7- shows a plan view of the manual shoot remover in an alternative embodiment, its sides describing an arc, incorporating an optional roller.

### Preferred embodiment of the invention

The manual shoot remover is characterized by comprising a rolled profile structure (1, 1.1, 1.2) formed by a base with a rolled profile section (11), centred on its lower part, also incorporating a ball-head connector (2) designed to anchor a handle with cross-body strap and, positioned on the same base with ball-head connector (2), a fixed side (3, 3.1, 3.2) forming part of the rolled profile structure and a moving side (4, 4.1, 4.2), there being interchangeable brushes (5) with several rows of bristles inserted in the profile of the said sides.

The sides (3 and 4) that form the rolled profile structure (1) are positioned on the base with ball-head connector (2), describing an angle of more than 90°.

Both the attachment of the interchangeable brushes (5) to the profiles of sides (3 and 4) and the attachment of the moving side (4) to the base with ball-head connector (2) is adjusted by means of bolts (6).

The moving side (4) comprises a rolled profile section joined to a hollow support that can be inserted in the base with ball-head connector (2).

Both the fixed side (3, 3.1, 3.2), and the moving side (4, 4.1, 4.2), positioned on the base with ball-head connector, as they face each other, maintain a slight slant preventing the brushes (5) inserted in them from meeting at the front.

In an alternative embodiment, the sides (3.1 and 4.1) that form the rolled profile structure (1.1.) are positioned on the base with ball-head connector (2), at an angle of approximately 90°.

In another alternative embodiment, the sides (3.2 and 4.2) that form the rolled profile structure (1.2.) are positioned on the base with ball-head connector (2), describing an arc.

Optionally, incorporated in the profile of the base with ball-head connector (2), and/or in the rolled profile section (11), is an additional brush (7), its position being adjusted by means of bolts (6).

Optionally, incorporated in the profile of the base with ball-head connector (2), is a roller (8), its position being adjusted by means of bolts (6).

Optionally, incorporated on sides (3, 3.1, 3.2) and/or (4, 4.1, 4.2), is a toothed support (10), its position being adjusted by means of bolts (6)

## Claims

1. Manual shoot remover, manoeuvrable via a handle with cross-body strap (9), comprising a rolled profile structure (1, 1.1, 1.2) formed by a base (11) with a rolled profile section, centred on its lower part, also incorporating a ball-head connector (2) designed to anchor a handle with cross-body strap and, positioned on the same base with ball-head connector (2), a fixed side (3, 3.1, 3.2) forming part of the rolled profile structure and a moving side (4, 4.1, 4.2), there being interchangeable brushes (5) with several rows of bristles inserted in the profile of the said sides, wherein both the fastening of the interchangeable brushes (5) to the profiles of the sides (3, 3.1, 3.2) and the fastening of the moving side (4, 4.1, 4.2) to the base with ball-head connector (2) is adjusted by means of bolts (6), and wherein the moving side (4, 4.1, 4.2) has a position adjustable along the base (11) with the rolled profile section.

2. Manual shoot remover, according to claim 1, wherein the sides (3 and 4) that form the rolled profile structure (1), are positioned on the base with ball-head connector (2), describing an angle of more than 90°.

3. Manual shoot remover, according to claim 1, wherein both the fixed side (3, 3.1, 3.2) and the moving side (4, 4.1, 4.2), positioned on the base with ball-head connector (2), face each other and maintain a slight slant, preventing the brushes (5) inserted in them from meeting at the front.

4. Manual shoot remover, according to claim 1, wherein the moving side (4, 4.1, 4.2), comprises a rolled profile section joined to a hollow support that can be inserted in the base with ball-head connector (2).

5. Manual shoot remover, according to claim 1, wherein the sides (3.1 and 4.1) that form the rolled profile structure (1.1) are positioned on the base with ball-head connector (2), at an approximate angle of 90°.

6. Manual shoot remover, according to claim 1, wherein the sides (3.2 and 4.2) that form the rolled profile structure (1.2), are positioned on the base with ball-head connector (2), describing an arc.

7. Manual shoot remover, according to claim 1, wherein the profile of the base with ball-head connector (2) incorporates an additional brush (7) its position being adjusted by means of bolts (6).

8. Manual shoot remover, according to claim 1 or 7, wherein in the rolled profile section (11) an additional brush (7) is incorporated its position being adjusted by means of bolts (6).

9. Manual shoot remover, according to claim 1, wherein the profile of the base with ball-head connector (2) incorporates a roller (8), its position being adjusted by means of bolts (6).

10. Manual shoot remover, according to claim 1, wherein on the sides (3, 3.1, 3.2) and/or (4, 4.1, 4.2), a toothed support (10) is incorporated, its position being adjusted by means of bolts (6).

## Patentansprüche

1. Manueller Sprossentferner, manövrierbar über einen Handgriff mit Querriemen (9), aufweisend eine Struktur mit gerolltem Profil (1, 1.1, 1. 2) gebildet durch eine Basis (11) mit einem gewalzten Profilabschnitt, die an ihrem unteren Teil zentriert ist und auch ein Kugelkopfverbinder (2) enthält, das dazu bestimmt ist, einen Handgriff mit Querriemen zu verankern, und, auf derselben Basis mit Kugelkopfverbinder (2) positioniert, eine feste Seite (3, 3.1, 3.2), die Teil der Struktur mit gerolltem Profil ist, und eine bewegliche Seite (4, 4.1, 4), an der austauschbare Bürsten (5) angeordnet sind, wobei in das Profil der genannten Seiten mehrere Borstenreihen eingesetzt sind, wobei sowohl die Befestigung der austauschbaren Bürsten (5) an den Profilen der Seiten (3, 3.1, 3.2) als auch die Befestigung der beweglichen Seite (4, 4.1, 4.2) an der Basis mit Kugelkopfverbinder (2) mittels Schrauben (6) eingestellt wird, und wobei die bewegliche Seite (4, 4.1, 4.2) eine entlang der Basis (11) mit dem gewalzten Profilabschnitt einstellbare Position aufweist.

2. Manueller Sprossentferner nach Anspruch 1, wobei die Seiten (3 und 4), die die Struktur des gewalzten Profils (1) bilden, auf der Basis mit Kugelkopfverbinder (2) positioniert sind, einen Winkel von mehr als 90° beschreibend.

3. Manueller Sprossentferner nach Anspruch 1, wobei sowohl die feste Seite (3, 3.1, 3.2) als auch die bewegliche Seite (4, 4.1, 4.2), die mit einem Kugelkopfverbinder (2) auf der Basis positioniert sind, einander zugewandt sind und eine leichte Neigung beibehalten, wodurch verhindert wird, dass sich die in sie eingesetzten Bürsten (5) an der Vorderseite treffen.

4. Manueller Sprossentferner nach Anspruch 1, wobei die bewegliche Seite (4, 4.1, 4.2) einen gewalzten Profilabschnitt aufweist, der mit einem hohlen Träger verbunden ist, der mit einem Kugelkopfverbinder (2) in die Basis eingeführt werden kann.

5. Manueller Sprossentferner nach Anspruch 1, wobei die Seiten (3.1 und 4.1), die die Walzprofilstruktur (1.1) bilden, auf der Basis mit Kugelkopfverbinder (2) in einem ungefähren Winkel von 90° positioniert sind.

6. Manueller Sprossentferner nach Anspruch 1, wobei die Seiten (3.2 und 4.2), die die Walzprofilstruktur (1.2) bilden, auf der Basis mit dem Kugelkopfverbinder (2), der einen Bogen beschreibt, positioniert sind.

7. Manueller Sprossentferner nach Anspruch 1, wobei das Profil der Basis mit Kugelkopfverbinder (2) eine zusätzliche Bürste (7) aufweist, deren Position mit Hilfe von Schrauben (6) eingestellt wird.

8. Manueller Sprossentferner nach Anspruch 1 oder 7, wobei in dem gewalzten Profilabschnitt (11) eine zusätzliche Bürste (7) enthalten ist, deren Position mit Hilfe von Schrauben (6) eingestellt wird.

9. Manueller Sprossentferner nach Anspruch 1, wobei das Profil der Basis mit Kugelkopfverbinder (2) eine Rolle (8) aufweist, deren Position mit Hilfe von Schrauben (6) eingestellt wird.

10. Manueller Sprossentferner nach Anspruch 1, wobei an den Seiten (3, 3.1, 3.2) und/oder (4, 4.1, 4.2) ein gezahnter Träger (10) enthalten ist, dessen Position mittels Schrauben (6) eingestellt wird.

## Revendications

1. Un ébourgeonneur manuel, manœuvrable au moyen d'un manche avec bandoulière (9) comprenant une structure à profilé laminé (1, 1.1, 1.2) constitué d'une base (11) avec une section de profilé laminé, centré au niveau de sa partie inférieure, comprenant en outre un crochet à rotule (2) destiné à la fixation d'un manche avec une bandoulière et, placés au niveau de la même base avec un crochet à rotule (2), un côté fixe (3, 3.1, 3.2) faisant partie de la structure de profilé laminé et un côté mobile (4, 4.1, 4.2), incorporant dans le profilé de ces côtés des brosses interchangeables (5) avec plusieurs rangées de soies insérées dans le profilé desdits côtés, étant précisé qu'à la fois la fixation des brosses interchangeables (5) dans les profilés des côtés (3, 3.1, 3.2) et la fixation du côté mobile (4, 4.1, 4.2) à la base avec le crochet à rotule (2) sont ajustées au moyen de boulons (6), et étant précisé que le côté mobile (4, 4.1, 4.2) présente une position ajustable le long de la base (11) avec la section de profilé laminé.

2. L'ébourgeonneur manuel conformément à la Revendication 1, étant précisé que les côtés (3 et 4) qui forment la structure à profilé laminé (1) sont positionnés sur la base avec le crochet à rotule (2), à un angle de plus de 90°.

3. L'ébourgeonneur manuel conformément à la Revendication 1, étant précisé que le côté fixe (3, 3.1, 3.2) et le côté mobile (4, 4.1, 4.2), positionnés sur la base avec le crochet à rotule (2), se font face et présentent une légère inclinaison, évitant que les brosses (5) insérées dans lesdits côtés entrent en contact à l'avant.

4. L'ébourgeonneur manuel conformément à la Revendication 1, étant précisé que le côté mobile (4, 4.1, 4.2) comprend une section de profilé laminé fixé à un support creux pouvant être inséré dans la base avec le crochet à rotule (2).

5. L'ébourgeonneur manuel conformément à la Revendication 1, étant précisé que les côtés (3.1 et 4.1) qui forment la structure à profilé laminé (1.1) sont positionnés sur la base avec le crochet à rotule (2), à un angle approximatif de 90°.

6. L'ébourgeonneur manuel conformément à la Revendication 1, étant précisé que les côtés (3.2 et 4.2) qui forment la structure à profilé laminé (1.2) sont positionnés sur la base avec le crochet à rotule (2), et décrivent un arc.

7. L'ébourgeonneur manuel conformément à la Revendication 1, étant précisé que le profilé sur la base avec le crochet à rotule (2) comprend une brosse additionnelle (7), sa position étant ajustée au moyen de boulons (6).

8. L'ébourgeonneur manuel conformément à l'une quelconque des Revendications 1 à 7, étant précisé que, dans la section de profilé laminé (11), une brosse additionnelle (7) est insérée, sa position pouvant être ajustée au moyen de boulons (6).

9. L'ébourgeonneur manuel conformément à la Revendication 1, étant précisé que le profilé sur la base avec le crochet à rotule (2) comprend un rouleau (8), sa position pouvant être ajustée au moyen de boulons (6).

10. L'ébourgeonneur manuel conformément à la Revendication 1, étant précisé que sur les côtés (3, 3.1, 3.2) et/ou (4, 4.1, 4.2), un support denté (10) est inséré, sa position pouvant être ajustée au moyen de boulons (6).
